# EUROPEAN PATENT APPLICATION

(11) **EP 4 491 885 A1**
(43) Date of publication of application: **15.01.2025**
(21) Application number: 23766293.7
(22) Date of filing: 10.01.2023
(51) Int. Cl.: F15B 15/10

(54) **FLUID PRESSURE ACTUATOR WITH COVER**

(30) Priority: 08.03.2022 JP 2022035717
(71) Applicant: BRIDGESTONE CORPORATION, Chuo-ku Tokyo 104-8340 (JP)
(72) Inventor: MINOSHIMA Haruki, Tokyo 104-8340 (JP); OONO Shingo, Tokyo 104-8340 (JP)
(74) Representative: Marks & Clerk LLP
(86) International application number: PCT/JP2023/000329
(87) International publication number: WO 2023/171112

(57) **Abstract**

The provided is a fluid pressure actuator with a cover, in which the sleeve and the cover are at least partially non-contact with each other in a state where no fluid pressure is applied.

## Description

### TECHNICAL FIELD

This disclosure relates to a fluid pressure actuator with a cover.

### BACKGROUND

Fluid pressure actuators that can achieve a desired motion by expanding and contracting a tube covered by a sleeve (also called "McKibben-type fluid pressure actuators") has been proposed for use in the field of robotics (See, e.g., Patent Document 1.). In Patent Document 1, the fluid pressure actuators are used not only as a lifting part (robot arm) to lift objects, but also as a gripping part (finger robot hand) to achieve the behavior of human fingers.

### CITATION LIST

### Patent Literature

PTL 1: JP 2021-088999 A1

### SUMMARY

### (Technical Problem)

For the robot hand described above, it is conceivable to install a cover over the robot hand to prevent contamination of the robot hand, to prevent slippage of the fingertips of the robot hand (the tip of the fluid pressure actuator), and to prevent contamination by wear powder due to the operation of the robot hand. However, since the fluid pressure actuator used as the robot hand is repeatedly bent, the cover also needs to deform to follow the curvature, and there is a risk of cracks, etc. in the cover due to load on the cover or friction between the cover and the fluid pressure actuator.

It is therefore an object of the present disclosure to provide a fluid pressure actuator with a cover in which the cover has improved durability.

### (Solution to Problem)

The gist structure of the present disclosure is as follows.

A fluid pressure actuator with a cover, comprising a fluid pressure actuator and a cover covering the fluid pressure actuator, wherein
the fluid pressure actuator comprises a cylindrical tube that expands and contracts by fluid pressure, a sleeve that is an elastic structure made of woven fiber cords oriented in a predetermined direction and covers an outer circumference of the tube, and a sealing member that seals an end portion in an axial direction of the tube, and
the sleeve and the cover are at least partially non-contact with each other in a state where no fluid pressure is applied.

As used herein, the "outer diameter of sleeve" and the "outer diameter of sealing member" shall refer to the maximum diameter, respectively.

As used herein, the "thickness of sealing member cover portion" shall refer to the minimum thickness.

### (Advantageous Effect)

According to the present disclosure, it is possible to provide a fluid pressure actuator with a cover in which the cover has improved durability.

### BRIEF DESCRIPTION OF THE DRAWINGS

In the accompanying drawings:
FIG. 1 is a side view of a fluid pressure actuator;
FIG. 2 is a partially exploded perspective view of the fluid pressure actuator;
FIG. 3 is a partial cross-sectional view, along the axial direction DAX, of the fluid pressure actuator including a sealing mechanism;
FIG. 4 is a cross-sectional view, along the radial direction DR, of the actuator body;
FIG. 5 is an illustration explaining the behavior of the fluid pressure actuator;
FIG. 6 is a schematic illustration of the fluid pressure actuator;
FIG. 7 is a schematic illustration of a fluid pressure actuator with a cover according to one embodiment of this disclosure; and
FIG. 8 is a schematic cross-sectional view of a cover for the fluid pressure actuator.

### DETAILED DESCRIPTION

Hereinafter, embodiments of the present disclosure will be described in detail with reference to the drawings.

### < Fluid pressure actuator >

### « Overall schematic configuration of fluid pressure actuator »

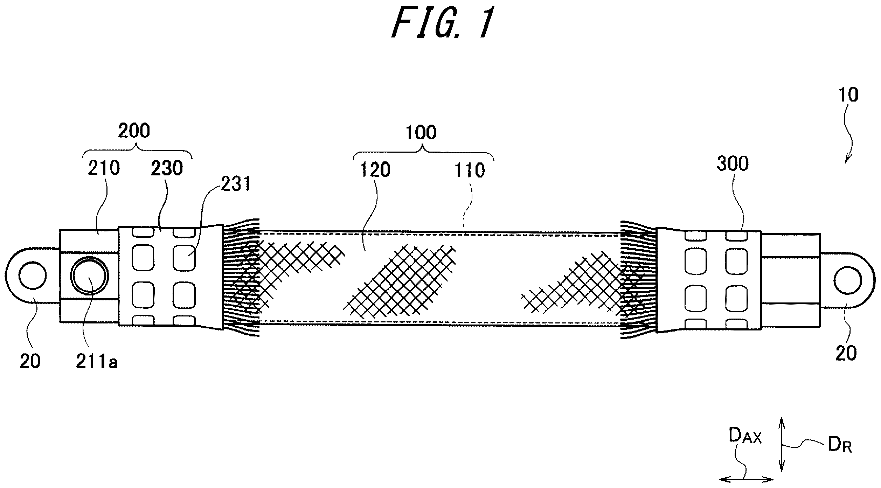

Figure 1 is a side view of a fluid pressure actuator 10. As illustrated in Figure 1, the fluid pressure actuator 10 comprises an actuator body 100, a sealing mechanism 200, and a sealing mechanism 300. In addition, a coupling section 20 is provided at each end of the fluid pressure actuator 10.

The actuator body 100 is composed of a tube 110 and a sleeve 120. Fluid flows into the actuator body 100 through a connection port 211a.

The basic characteristic of the actuator body 100 is that fluid flow into the tube 110 causes the actuator body 100 to contract in the axial direction DAX and expand in the radial direction DR of the actuator body 100. Also, fluid flow out of the tube 110 causes the actuator body 100 to expand in the axial direction DAX and contract in the radial direction DR of the actuator body 100. This change in the shape of the actuator body 100 allows the fluid pressure actuator 10 to function as an actuator.

Such a fluid pressure actuator 10 is a so-called McKibben type and can be applied for artificial muscles, as well as for body limbs (such as upper and lower limbs) of robots that require higher capacity (contractile force). To the coupling section 20, members constituting the limbs and the like are connected.

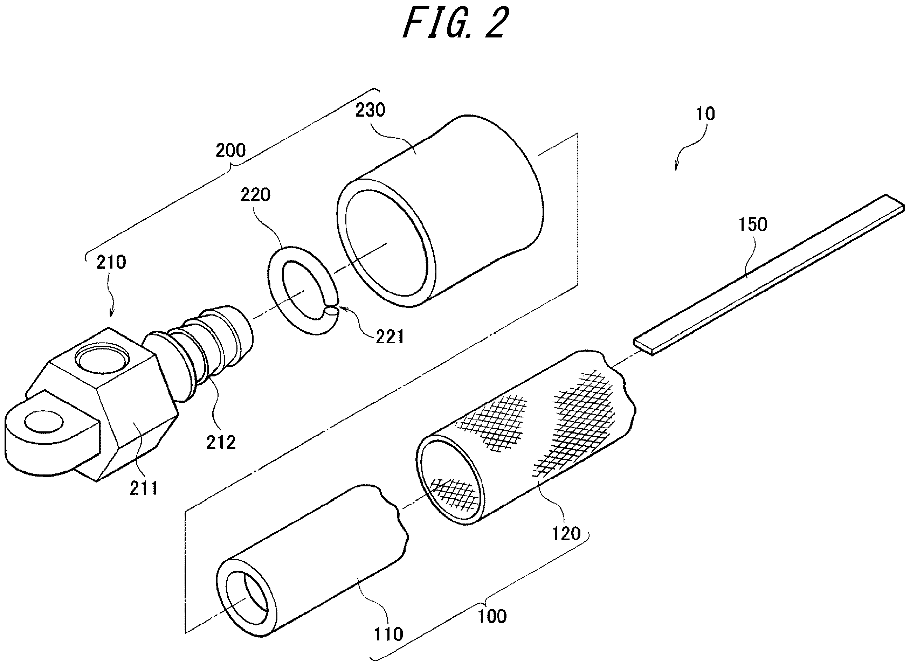

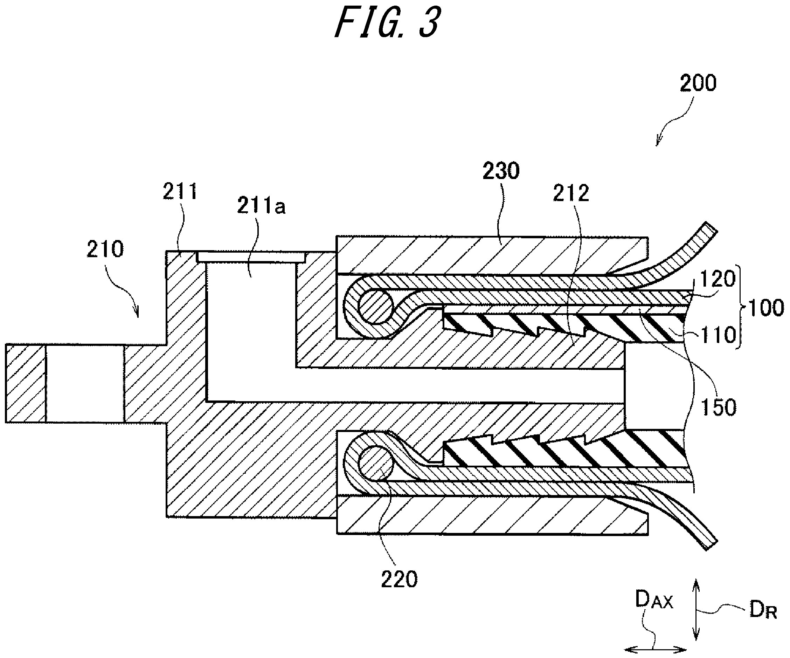

In this embodiment, a McKibben-type fluid pressure actuator with these basic characteristics is used, and by providing a restraining member 150 (not illustrated in Figure 1, see Figures 2 and 3, etc.) that restrains (regulates or limits; same below) compression in the axial direction DAX, it can be bent (curled) in the orthogonal direction perpendicular to the axial direction DAX, i.e., in the radial direction DR.

The fluid used to drive the fluid pressure actuator 10 can be either a gas, such as air, or a liquid, such as water or mineral oil, however in particular, the fluid pressure actuator 10 can have high durability to withstand hydraulic drive, where high pressure is applied to the actuator body 100.

The sealing mechanism 200 and the sealing mechanism 300 seal both end portions in the axial direction DAX of the actuator body 100. Specifically, the sealing mechanism 200 includes a sealing member 210 and a caulking member 230. The sealing member 210 seals the end portion in the axial direction DAX of the actuator body 100. The caulking member 230 caulks the actuator body 100 together with the sealing member 210. On the outer surface of the caulking member 230, an indentation 231 is formed, which is a mark where the caulking member 230 has been caulked by the jig.

The difference between the sealing mechanism 200 and the sealing mechanism 300 is whether or not the connection port 211a is provided.

The connection port 211a can be fitted with a hose (conduit) connected to the drive pressure source of the fluid pressure actuator 10, specifically, a gas or liquid compressor. Fluid that flows in through the connection port 211a passes through the passage holes (not illustrated) and flows into the interior of the actuator body 100, specifically, the tube 110.

Figure 2 is a partially exploded perspective view of the fluid pressure actuator 10. As illustrated in Figure 2, the fluid pressure actuator 10 comprises the actuator body 100 and the sealing mechanism 200.

The actuator body 100 is composed of the tube 110 and the sleeve 120, as described above.

The tube 110 is a cylindrical tube that expands and contracts with fluid pressure. The tube 110 is composed of elastic material, such as butyl rubber, for repeated contraction and expansion due to the fluid. When the fluid pressure actuator 10 is hydraulically driven, the tube is preferably at least one type selected from the group consisting of NBR (nitrile rubber) with high oil resistance, or hydrogenated NBR, chloroprene rubber, and epichlorohydrin rubber.

The sleeve 120 is cylindrical and covers the outer circumference of the tube 110. The sleeve 120 is an elastic structure made of woven fiber cords oriented in a predetermined direction, and the oriented cords intersect to form a repeated diamond shape. The sleeve 120, by having this shape, pantographically deforms, and follows the tube 110 while regulating its contraction and expansion.

Aromatic polyamide (aramid fiber) or polyethylene terephthalate (PET) fiber cords are preferably used as the cords that make up the sleeve 120. However, it is not limited to these types of fiber cords, but can also be made of high-strength fibers, such as PBO fiber (poly-p-phenylenebenzobisoxazole), for example.

In addition, in this embodiment, the restraining member 150 is provided between the tube 110 and the sleeve 120.

The restraining member 150 does not compress in the axial direction DAX, but is deformable only along the radial direction DR (which may be called the direction of deflection). That is, the restraining member 150 resists compression along the axial direction DAX and is deformable in the orthogonal direction perpendicular to the axial direction DAX (radial direction DR).

In other words, the restraining member 150 has characteristics that make it difficult to deform along the axial direction DAX and flex along the radial direction DR. Note, that the term deformable may be paraphrased as bendable or curlable.

In addition, the restraining member 150 also functions to restrain (regulate) the expansion of the tube 110 (and the sleeve 120) outward in the radial direction DR at the location on the outer circumference of the tube 110 where the restraining member 150 is provided.

In this embodiment, the restraining member 150 is provided on the inner side of the sleeve 120, specifically, in the radially inner space of the sleeve 120, from one end to the other end in the axial direction DAX. In addition, in this embodiment, the restraining member 150 is formed using a leaf spring.

The dimensions of the leaf spring are preferably selected according to the size of the fluid pressure actuator 10 and the required generating force, and are not limited. The material of the leaf spring is also not limited, but typically it is preferably a material that is easy to bend and resistant to compression, such as stainless steel and other metals, etc. For example, the restraining member 150 may be formed from a thin sheet of carbon fiber reinforced plastic (CFRP). Since CFRP is less susceptible to plastic deformation than metal, the fluid pressure actuator 10 easily returns to its original straight state after bending.

The sealing mechanism 200 seals the end portion in the axial direction DAX of the actuator body 100. The sealing mechanism 200 is composed of the sealing member 210, a locking ring 220, and the caulking member 230.

The sealing member 210 is inserted into the tubular actuator body 100. Specifically, the sealing member 210 has a head part 211 and a body part 212, and the body part 212 is inserted into the tube 110.

A metal such as stainless steel can be suitably used as the sealing member 210, but it is not limited to such metals, and a hard plastic material or the like can also be used.

The locking ring 220 secures the sleeve 120 to the sealing member 210. Specifically, the sleeve 120 is folded outward in the radial direction DR through the locking ring 220 (not illustrated in Figure 2, see Figure 3).

The locking ring 220 has a partially notched notch 221 to allow engagement with the sealing member 210. The locking ring 220 can be made of the same metal, hard plastic material, or other material as the sealing member 210, as well as natural fibers (natural fiber threads), rubber (e.g., O-rings), or other materials.

The caulking member 230 caulks the actuator body 100 together with the sealing member 210. Specifically, the caulking member 230 is provided on the outer circumference of the portion of the actuator body 100 through which the sealing member 210 is inserted, and caulks the actuator body 100 onto the sealing member 210.

As the caulking member 230, metals such as aluminum alloy, brass, and iron can be used. When the caulking member 230 is caulked by the caulking jig, the indentation 231 is formed in the caulking member 230, as illustrated in Figure 1.

### « Configuration of sealing mechanism 200 »

Figure 3 is a partial cross-sectional view, along the axial direction DAX, of the fluid pressure actuator 10 including the sealing mechanism 200.

As illustrated in Figure 3, the body part 212 is inserted into the tube 110. The sleeve 120 is folded outward in the radial direction DR through the locking ring 220.

The restraining member 150 is provided on the inner side of the sleeve 120 in the radial direction DR. Specifically, the restraining member 150 is provided between the tube 110 and the sleeve 120.

In addition, the restraining member 150 is provided at a portion in the circumferential direction of the actuator body 100. In other words, the restraining member 150 is provided only at a portion in the circumferential direction of the tube 110 (and the sleeve 120).

The restraining member 150 is provided over the actuator body 100 (i.e., the tube 110 and the sleeve 120) from one end to the other end in the axial direction DAX. Specifically, the restraining member 150 may be provided from the sealing mechanism 200 to the sealing mechanism 300.

However, the restraining member 150 does not necessarily have to completely extend from the sealing mechanism 200 to the sealing mechanism 300, and the restraining member 150 does not have to extend to either the sealing mechanism 200 or the sealing mechanism 300 (especially on the sealing mechanism 300 side, which is more likely to be the free end during bending).

The caulking member 230 is larger than the outer diameter of the body part 212 of the sealing member 210 and is caulked by the jig with the body part 212 inserted. The caulking member 230 caulks the actuator body 100 together with the sealing member 210.

Specifically, the caulking member 230 caulks the tube 110 through which the body part 212 is inserted and the sleeve 120 located on the outer side of the tube 110 in the radial direction DR. In other words, the caulking member 230 caulks the tube 110 and sleeve 120 together with the sealing member 210.

### « Configuration of actuator body 100 »

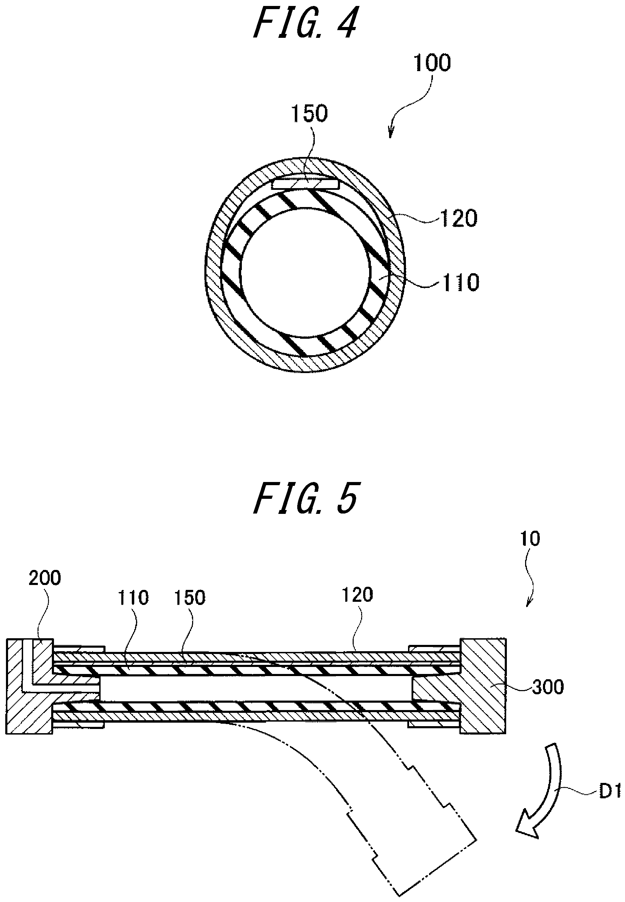

Figure 4 is a cross-sectional view, along the radial direction DR, of the actuator body 100. As illustrated in Figure 4, the restraining member 150 is provided between the tube 110 and the sleeve 120. The restraining member 150 may be in close contact with the tube 110 and the sleeve 120, and some gap may be formed between the restraining member 150 and the tube 110 and/or the sleeve 120 and to the sides of the restraining member 150.

The restraining member 150 is provided at a portion in the circumferential direction of the tube 110. The width of the restraining member 150 is not particularly limited, but based on the outer diameter of the tube 110, it may be approximately half of the outer diameter. As an example, the outer diameter of the tube 110 can be 11 mm, the length of the actuator body 100 that contracts can be 185 mm, and the restraining member 150 (leaf spring) can be 6 mm wide and about 0.5 mm thick.

Note, that in this embodiment, the restraining member 150 is flat, but it may be curved somewhat along the cross-sectional shape of the tube 110 and the sleeve 120 to the extent that it does not affect the way it flexes.

### « Behavior of fluid pressure actuator 10 »

Figure 5 is an illustration explaining the behavior of the fluid pressure actuator. In the fluid pressure actuator 10 illustrated in Figure 5, the sealing mechanism 200 side is fixed, and the sealing mechanism 300 side is free to move. In other words, the sealing mechanism 200 side is a fixed end, and the sealing mechanism 300 side is a free end.

As described above, when fluid flows into the fluid pressure actuator 10, it tries to contract in the axial direction DAX, but because the restraining member 150 is provided, the contraction along the axial direction DAX is restrained (regulated).

In other words, the restraining member 150 formed by a rigid member such as a leaf spring acts like a backbone, and on the side opposite the position on the outer circumference of the tube 110 and sleeve 120 where the restraining member 150 is provided (the lower side in Fig. 5), as it expands outward in the radial direction DR, the dimensions of the fluid pressure actuator 10 in the axial direction DAX shorten and the fluid pressure actuator 10 (specifically, the actuator body 100) flexes along direction D1. The direction D1 may be called as a flexible direction.

The restraining member 150 is a member provided between the rubber tube 110 and the sleeve 120, resists compression in the axial direction DAX and can deform along a perpendicular direction orthogonal to the axial direction (radial direction DR), and is located at a portion in the circumferential direction of the actuator body 100.

In other words, when the actuator body 100 (McKibben) tries to contract along the axial direction DAX due to the inflow (pressurization) of fluid into the actuator body 100, the part where the restraining member 150 is located cannot contract because of the high compressive stiffness of the restraining member 150. On the other hand, the other parts of the actuator body 100 try to contract, resulting in a bending direction force along the orthogonal direction (radial direction DR) and bending with the restraining member as its back.

The fluid pressure actuator 10 has the following features: large bending angle, large force generation, easy force control (force generated is proportional to pressure), simple structure, and can even directly touch the object to be handled by coating the surface.

In addition, the restraining member 150 provided in the fluid pressure actuator 10 resists compression along the axial direction DAX of the actuator body 100 (specifically, the tube 110) and is deformable in the radial direction DR perpendicular to the axial direction DAX.

Since the restraining member 150 is provided on the inner side of the tube 110, it does not increase the size of the fluid pressure actuator 10. Furthermore, the restraining member 150 can efficiently generate a force in the bending direction.

In other words, the fluid pressure actuator 10 can exert a greater force in the bending direction while avoiding an increase in size.

In this embodiment, the restraining member 150 is provided on a portion in the circumferential direction of the tube 110. This causes some parts to contract and some parts to fail to contract around the circumference of the actuator body 100, and when the fluid pressure actuator 10 is pressurized, it bends in one direction (opposite to the side where the restraining member 150 is provided). This allows for more efficient generation of force in the bending direction and can exert a greater force in the bending direction.

In this embodiment, the restraining member 150 is provided between the tube 110 and the sleeve 120. This effectively restrains (regulates) the expansion of the tube 110 along the axial direction DAX. This allows for more efficient generation of force in the bending direction and can exert a greater force in the bending direction.

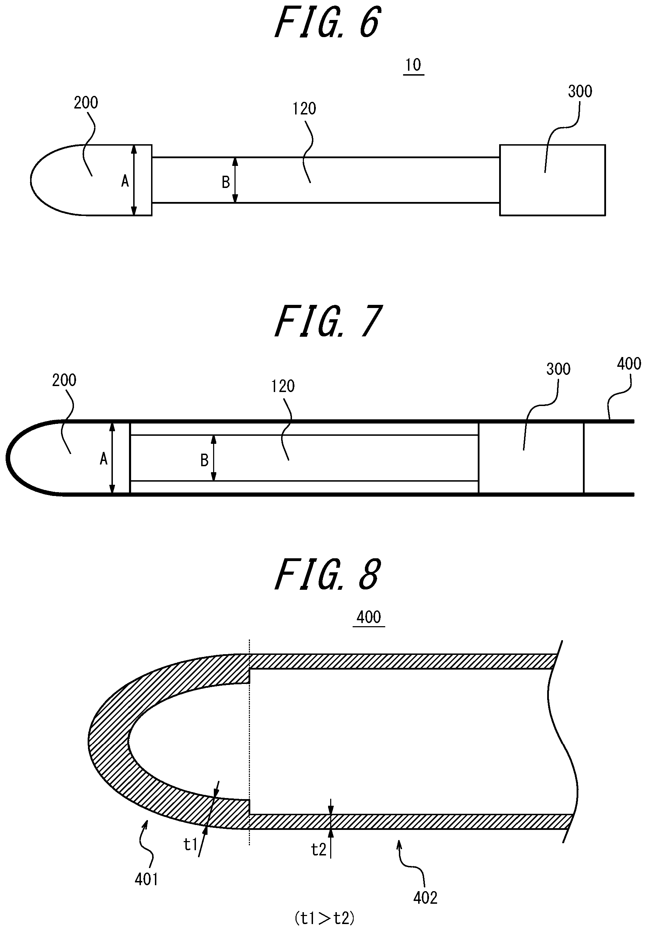

Figure 6 is a schematic illustration of the fluid pressure actuator. Figure 7 is a schematic illustration of a fluid pressure actuator with a cover according to one embodiment of this disclosure. As illustrated in Figures 6 and 7, in this fluid pressure actuator, the outer diameter B of the sleeve 120 is smaller than the outer diameter A of the sealing member 200 (300) in a state where no fluid pressure is applied. With this configuration, as illustrated in Fig. 7, in the fluid pressure actuator with a cover, in the part of the sealing member 200 (300) of the fluid pressure actuator, the fluid pressure actuator and the cover 400 are in contact with each other over almost the entire surface, while in the part of the sleeve 120 of the fluid pressure actuator, a gap is provided (at least partially; entirely in the illustrated example) between the sleeve 120 and the cover 400, so that the sleeve 120 and the cover 400 are at least partially (entirely in the illustrated example) non-contact with each other.

The following is an explanation of the effects of this embodiment.

In the fluid pressure actuator with a cover according to this embodiment, as mentioned above, in the part of the sleeve 120 of the fluid pressure actuator, a gap is created (at least partially; entirely in the illustrated example) between the fluid pressure actuator and the cover, and in that part, the sleeve 120 and the cover 400 are in non-contact each other. This reduces the wear that occurs between the sleeve 120 and the cover 400, and also reduces the deformation during the expansion of the cover 400 that follows the curvature of the fluid pressure actuator 10, thereby reducing the load.

Thus, according to the fluid pressure actuator with a cover in accordance with the present disclosure, the durability of the cover can be improved.

In addition, the friction between the cover and fluid pressure actuator can be reduced when the cover is attached to the fluid pressure actuator, making cover replacement easier.

Note, that since the fluid pressure actuator and the cover 400 are in contact with each other over almost the entire surface in the part of the sealing member 200 (300) of the fluid pressure actuator, contamination by wear powder from the operation of the robot hand can also be prevented.

Figure 8 is a schematic cross-sectional view of the cover for the fluid pressure actuator. As illustrated in Figure 8, the cover 400 for the fluid pressure actuator is thinner in at least part (entire part in the illustrated example) of a sleeve cover portion 402 covering the sleeve 120 of the fluid pressure actuator than in a sealing member cover portion 401 covering the sealing member 200 (300) of the fluid pressure actuator (the thickness thereof is approximately constant in the illustrated example), due to reducing the thickness of the sleeve cover portion at an inner-circumference side (by providing a step in the illustrated example).

This configuration also allows, in a state where no fluid pressure is applied, that in the part of the sealing member 200 (300) of the fluid pressure actuator, the fluid pressure actuator and the cover 400 are in contact with each other over almost the entire surface, while in the part of the sleeve 120 of the fluid pressure actuator, a gap is provided (at least partially; entirely in the illustrated example) between the sleeve and the cover, so that the sleeve and the cover are non-contact with each other.

Therefore, according to this cover for the fluid pressure actuator, the durability of the cover can be improved for the same reason as above. In addition, as described above, the cover can be easily replaced, and contamination by wear powder due to the operation of the robot hand can be prevented.

Note, that the cover may cover only the fluid pressure actuator, but it can be configured so that it can cover not only the finger section, which the fluid pressure actuator consists of, but also the palm and arm sections that connect multiple fluid pressure actuators.

### REFERENCE SIGNS LIST

10 Fluid pressure actuator
20 Coupling section
100, 100A, 100B Actuator body
110 Tube
120 Sleeve
150, 150A, 150B Restraining member
151 Piano wire
160 Spacer
200, 200A Sealing mechanism
210 Sealing member
211 Head part
211a Connection port
212 Body part
220 Locking ring
221 Notch
230 Caulking member
231 Indentation
300 Sealing mechanism
400 Cover (cover for fluid pressure actuator)

## Claims

1. A fluid pressure actuator with a cover, comprising a fluid pressure actuator and a cover covering the fluid pressure actuator, wherein
the fluid pressure actuator comprises a cylindrical tube that expands and contracts by fluid pressure, a sleeve that is an elastic structure made of woven fiber cords oriented in a predetermined direction and covers an outer circumference of the tube, and a sealing member that seals an end portion in an axial direction of the tube, and
the sleeve and the cover are at least partially non-contact with each other in a state where no fluid pressure is applied.

2. The fluid pressure actuator with a cover according to claim 1, wherein an outer diameter of the sleeve is smaller than an outer diameter of the sealing member in a state where no fluid pressure is applied.

3. The fluid pressure actuator with a cover according to claim 1, wherein the cover is thinner in at least part of a sleeve cover portion covering the sleeve of the fluid pressure actuator than in a sealing member cover portion covering the sealing member of the fluid pressure actuator, due to reducing the thickness of the sleeve cover portion at an inner-circumference side.
